# EUROPEAN PATENT SPECIFICATION

(11) **EP 3 669 632 B1**
(45) Date of publication and mention of the grant of the patent: **16.02.2022**
(21) Application number: 18213665.5
(22) Date of filing: 18.12.2018
(51) Int. Cl.: A01D 41/14, A01D 41/16, A01D 69/08

(54) **A HEADER DRIVELINE COUPLING MECHANISM FOR A COMBINE HARVESTER**
KUPPLUNGSMECHANISMUS EINES VORSATZANTRIEBSSTRANGS FÜR EINEN MÄHDRESCHER
MÉCANISME DE COUPLAGE D'ENTRAÎNEMENT DE TÊTE DESTINÉ À UNE MOISSONNEUSE-BATTEUSE

(43) Date of publication of application: 24.06.2020
(73) Proprietor: CNH Industrial Belgium NV, 8210 Zedelgem (BE)
(72) Inventor: Reubens, Sam, 8200 Sint-Michiels (BE)
(74) Representative: CNH Industrial IP Department

(56) References cited:
- WO-A1-2015/134055
- AU-B2- 434 298
- DE-A1- 1 507 338
- US-A- 3 324 637

## Description

### Field of the Invention

The present invention is related to combine harvesters, in particular to the driveline for actuating the operation of the header of the combine.

### Background of the invention

Agricultural combine harvesters are machines designed for harvesting and processing crops such as wheat or corn. Crops are cut from the field on a wide area by the header mounted at the front of the combine. By an auger or a belt system included in the header, the harvested material is brought to a central area of the header, and from there it is transported by the feeder to a threshing mechanism comprising laterally or longitudinally mounted threshing rotors and further to the cleaning section comprising a number of sieves where grains are separated from any remaining crop residue.

A driveline from the combine's power source to the header passes along one side of the feeder where it is coupled to a header driveline oriented transversely to the forward direction of the combine. The coupling of the header driveline to the feeder driveline is done manually in most combines existing today. This is a time-consuming operation which adds to the downtime when a header needs to be released and replaced.

Combine harvesters are known from the documents AU 434 298 B2, US 3 324 637 A and WO 2015 134055 A1.

### Summary of the invention

The present invention is related to a combine harvester in accordance with claim 1, the combine harvester being equipped with an automatic header driveline coupling mechanism, as disclosed in the appended claims. The mechanism is configured to couple the header driveline to a jackshaft extending from the feeder, and comprises a pendulum arm which is pivotably connected to the header. An actuator is furthermore provided for driving a pivoting motion of the pendulum arm about a pivot axis oriented transversely with respect to the jackshaft. At the end of the pendulum arm, a bearing hub is mounted comprising a shaft portion that is rotatably coupled to the header driveline at one end and that comprises one part of a clutch at the other end. The second part of the clutch is mounted on the jackshaft. The pivoting motion of the pendulum arm, driven by the actuator, closes or releases the clutch. According to a preferred embodiment, the actuator is part of an actuator assembly further comprising a pair of foldable arms, one of which is pivotable with respect to the header, while the other is pivotably connected to the pendulum arm and wherein the actuator drives the motion of the midpoint between the foldable arms, so that said motion is transferred to the pivoting of the pendulum arm. The advantage of this particular actuator assembly is that it allows to automatically protect the coupling against involuntary release, by driving the midpoint of the foldable arms beyond the outer pivot points of these arms, when the clutch parts are interlocked.

### Brief description of the drawings

Figure 1 is a schematic side view of a combine header as known in the art, indicating the position of the header and the feeder at the front of the machine.
Figure 2 illustrates the coupling mechanism according to an embodiment of the invention and its location in a combine harvester.
Figure 3 is a section view of the coupling mechanism shown in Figure 2.

### Detailed description of preferred embodiments of the invention

Preferred embodiments will now be described with reference to the drawings. The detailed description is not limiting the scope of the invention, which is defined only by the appended claims. The terms 'front' and 'back' or 'rear' are referenced to the front and back side of the combine harvester. The 'forward direction' of the combine harvester refers not to a single geometrical axis but to the general direction from the rear of the vehicle to the front.

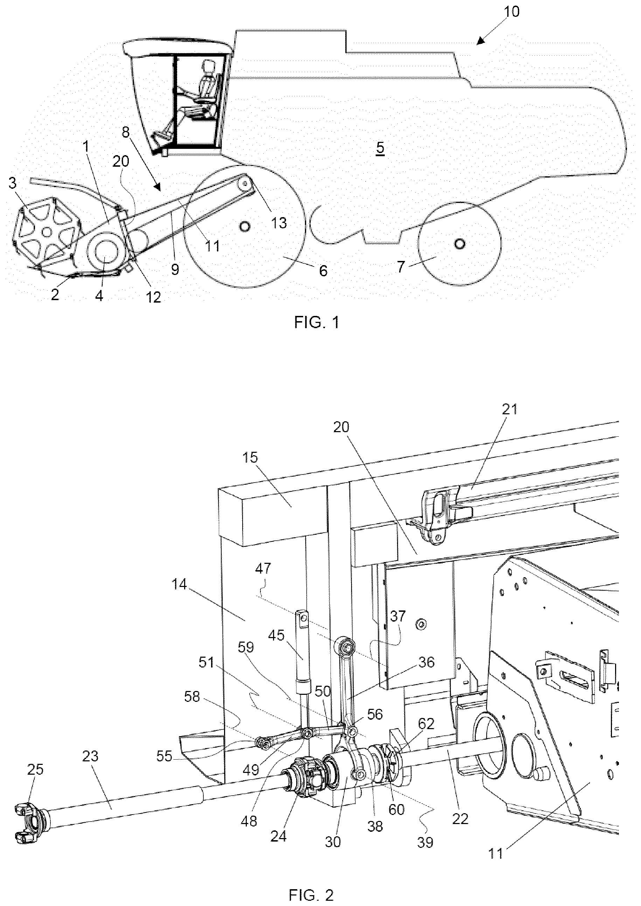

Figure 1 is a schematic image of a combine harvester 10 as known today, comprising a header 1 mounted at the front of the combine. The header comprises knives 2 maintained at a given height above ground level while the combine moves through a field of crops that are to be harvested. A rotating reel 3 guides the crops towards the knives. Cut crops are transported from both lateral sides of the header towards a central area by an auger 4. The main body 5 of the combine is supported by front and rear wheels 6 and 7 and comprises the threshing rotors and cleaning section generally known by the skilled reader and not depicted as such in Figure 1. From the central area of the header 1, crops are transported into the main body 5 of the combine by a feeder 8. The feeder 8 is inclined upwards from the header 1 towards the main body 5 and comprises moving belts 9 inside a housing 11. The belts transport the crops upwards, from an inlet section 12 of the feeder to an outlet section 13. At the front, the feeder comprises a cradle frame 20, onto which the header 1 is mounted and secured. The cradle frame 20 may be fixedly attached to the feeder 8, or it may be movable, for example for allowing the header 1 to undergo a tilting movement and/or a sideways floatation relative to the feeder 8. The rotation of the reel 3 and the auger 4 is driven by a driveline on the header which is itself coupled to the driveline of the combine as described in the introductory portion.

Figure 2 shows a detail of the left-hand side of the feeder housing 11, in a combine harvester according to a preferred embodiment of the invention. The cradle frame 20 is visible in the drawing. Also the header frame 14 is visible, which is the part of the header that is directly attached to the feeder. An interlocking beam 15 of the header frame is supported by a cradle 21 at the top of the cradle frame 20. A jackshaft 22 protrudes laterally from the feeder housing 11. The jackshaft 22 is part of a driveline which may comprise multiple drive axles interconnected by universal joints or other connection means and which is driven by a power source of the combine. These axles are generally oriented in the forward direction of the combine. In the vicinity of the feeder's inlet section 12, the driveline may then further comprise a transverse gearbox (not shown) or any equivalent means to transfer the rotation of the forwardly oriented driveline elements into the rotation of the transversely oriented jackshaft 22. The components described so far are known in the art and need not therefore be described in more detail.

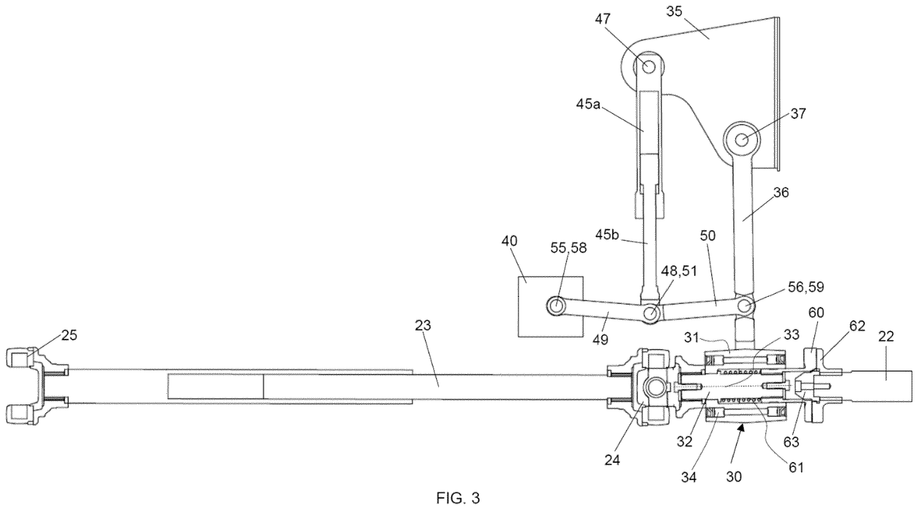

Also visible in Figure 2 is a drive shaft 23, which is part of the header driveline. The drive shaft 23 is extendable in length, and mounted between a first and second universal joint 24 and 25 (the second joint is only partially shown). Connected to the first universal joint 24 is the automatic coupling mechanism according to an embodiment of the invention. The various parts of the coupling mechanism will now be described with reference both to Figure 2 and to the section view in Figure 3.

A bearing hub 30 is provided, comprising a cylindrical housing 31 and an axle portion 32 arranged within the housing. The axle portion 32 is rotatable relative to the housing 31 about its central axis 33 via suitable bearings 34, preferably roller bearings. The housing 31 of the bearing hub is pivotably connected at one end of a pendulum arm 36. At its opposite end, the pendulum arm 36 is pivotably connected to a support 35 (not shown in Figure 2) that is fixedly attached to the backside of the header frame 14. The pendulum arm 36 is pivotable about a first fixed pivot axis 37 oriented transversely, preferably perpendicularly, with respect to the jackshaft 22. A 'fixed pivot axis' is to be understood in the present context as an axis that is fixed with respect to the header 1. The pivot connection of the pendulum arm 36 to the support 35 is preferably a flexible pivot connection, allowing a limited degree of movement of the pendulum arm 36 outside the plane perpendicular to the pivot axis 37. This may be achieved by mounting a resilient member between the pivot axle of the pendulum arm 36 and an opening in the support 35. At its opposite end, the pendulum arm 36 comprises a fork 38 having two legs between which the bearing hub 30 is rotatably held, via pivot connections on the side of the hub 30, allowing pivoting of the hub relative to the fork about pivot axis 39, equally oriented transversely with respect to the jackshaft 22.

An actuator assembly is furthermore provided. According to the embodiment shown, this assembly comprises a variable length actuator 45, which may be an electrical or a hydraulic actuator, comprising a base portion 45a and an extendable portion 45b (see Fig. 3). The base portion 45a is pivotably connected to the backside of the header frame 14, preferably via the same support 35 to which the pendulum arm 36 is connected. The actuator is thereby pivotable about a second fixed pivot axis 47 oriented transversely with respect to the jackshaft 22. The distal end of the extendable portion 45b of the actuator 45 is pivotably connected to the midpoint 48 of a pair of foldable arms 49,50. The arms are foldable by pivoting relative to each other about axis 51, through the midpoint 48. This leaves the two outer ends 55 and 56 of the pair of foldable arms. At the first outer end 55, the first foldable arm 49 is pivotably connected to a support 40 (not shown in Figure 2) that is fixedly attached to the backside of the header frame 14. The first foldable arm 49 is thereby pivotable about a third fixed pivot axis 58 oriented transversely with respect to the jackshaft 22. At the second outer end 56, the second foldable arm 50 is pivotably connected to the pendulum arm 36, at a location above the bearing hub 30. The second foldable arm 50 and the pendulum arm 36 are pivotable relative to each other about pivot axis 59. Preferably all the pivot axes 37,47,58,39,51 and 59 are substantially parallel to each other. Like the pivot connection of the pendulum arm 36 to the support 35, the pivot connections of the actuator 45 and the first foldable arm 49 for rotation respectively about axes 47 and 58 are preferably flexible pivot connections as defined above, for example by providing a resilient member in these pivot connections.

The first end of the axle portion 32 within the bearing hub 30 is rotatably connected to the universal joint 24. The opposite end of the axle portions 32 carries a spring-operated first part 60 of an axial clutch, preferably a jaw clutch. In the embodiment shown (see Figure 3), the spring-operation is achieved by rotatably connecting the first part 60 of the jaw clutch to the axle portion 32 mounted inside the bearing hub 30, while at the same time allowing axial motion of the jaw clutch part 60 relative to said axle portion 32, for example by a spline connection. The axial movement of the jaw clutch part 60 is limited in one direction and actuatable in the opposite direction by an axial spring 61. The second part 62 of the clutch is mounted on the outer end of the jackshaft 22. The second part 62 of the jaw clutch is furthermore provided with a conical alignment aid 63 in the middle of the jaw clutch part. This alignment aid is designed to fit into a central opening provided in the first clutch part 60.

The mechanism operates by driving the variable length actuator 45. Figure 3 shows the actuator 45 in the fully extended state. In this state, the clutch parts 60 and 62 are engaging and the header driveline is effectively coupled to the jackshaft 22. For releasing the coupling, the extendable portion 45b of the actuator 45 is retracted upwards, as seen in Figure 2. The midpoint 48 of the pair of foldable arms 49,50 is pulled upwards, causing the foldable arms 49 and 50 to be folded together. As the outer end 55 of the first foldable arm 49 is fixed to the header, this causes the second arm 50 to pull the pendulum arm 36 to the left, which results in a swinging motion of the pendulum arm 36 in the same direction and in the pulling away of the bearing hub 30 from the jackshaft 22. The clutch parts 60 and 62 are thereby released. The inverse movement is actuated by pushing the extendable portion 45b of the variable length actuator 45 down, until it reaches the position shown in Figure 3. The pendulum arm 36 swings to the right, thereby pushing the bearing hub 30 towards the jackshaft 22. By the alignment aid 63 and by the action of the spring 61, the two clutch parts 60 and 62 are brought into alignment and the coupling is established. Preferably, the alignment is further aided by a degree of flexibility of the pivoting movements about pivot axes 37, 47 and 58, afforded by the provision of resilient members in one or more of the respective pivot connections as described above. The mechanism thereby establishes the coupling automatically, without any manual intervention.

It is seen in the embodiment of Figure 3 that the actuator assembly is designed so that when the clutch parts 60 and 62 are interlocked, the midpoint 48 of the pair of foldable arms 49,50 is at a lower location than the outer ends 55,56 of this pair of arms. This provides an anti-release security to the coupling, even if the power to the variable length actuator 45 is lost. The midpoint 48 can only be raised by activating the variable length actuator 45. The mechanism is thereby protected from unwanted release of the coupling.

The invention is however not limited to the embodiment shown in the drawings. The actuator assembly could be replaced by any other assembly that performs the function of actuating the pivoting motion of the pendulum arm 36 about the first pivot axis 37. A variable length actuator could for example be oriented horizontally or at a suitable oblique angle to the horizontal direction, between a pivot point on the header frame 14 and the pivot point 56 on the pendulum arm 36.

According to an embodiment, the pivot connection that connects the pendulum arm 36 to the header is fixed relative to the header during operation of the coupling mechanism, but this pivot connection is displaceable between a variety of fixed positions, preferably in the vertical direction. In other words, the pivot axis 37 in Figure 3 can be placed higher or lower. This can be realized by any suitable mechanism, for example by providing multiple holes in the header frame along a vertical line, in which holes a rotation axle through the top portion of the pendulum arm 36 can be inserted. This feature lends a degree of adaptability to the coupling mechanism, allowing it to adapt to different positions of the jackshaft 22 for example.

The coupling mechanism is preferably arranged above the header driveline and the jackshaft 22, as shown in the drawings, but the same mechanism could be installed below these components, by mirroring the mechanism about the longitudinal axis of the jackshaft 22. In the latter case, the midpoint of the foldable arms 49,50 would need to be pushed upward for closing the clutch, and downward for opening it.

The hub 30 could be connected to the pendulum arm 36 in another way instead of through a pivotable connection that allows the hub to pivot about pivot axis 39. The hub could be attached at the end of the pendulum arm through a resilient member, that allows the hub sufficient freedom of movement relative to the pendulum arm 36, for enabling the hub to become aligned with the jackshaft 22. The hub could be substantially fixed to the pendulum arm 36, provided that the orientation of the jackshaft 22 is adapted for alignment with the hub when the pendulum arm 36 swings towards the closing position.

## Claims

1. A combine harvester (10) comprising :
• a feeder (8) at the front of the harvester, the feeder comprising a housing (11), an input section (12) and an output section (13),
• a driveline rotatably coupled to a power source of the combine and comprising a jackshaft (22) in the vicinity of the input section of the feeder,
• a combine header (1) removably attached to a front portion of the feeder (8), and comprising a header driveline that includes a header drive shaft (23) configured to be releasably coupled to the jackshaft (22), **characterised in that** the combine harvester (10) comprises a mechanism for automatically coupling the header drive shaft (23) to the jackshaft (22), said mechanism comprising :
• a pendulum arm (36) pivotably connected to the header (1) at a first end, and arranged to pivot relative to the header (1), about a first pivot axis (37) oriented transversely with respect to the jackshaft (22),
• a bearing hub (30) connected to the pendulum arm (36) at a second, opposite end of the pendulum arm (36), the hub (30) comprising a housing (31) and a rotatable axle portion (32) inside the housing (31) and rotatable relative to the housing (31), wherein one end of the axle portion (32) is rotatably connected to the header drive shaft (23), and an opposite end of the axle portion (32) comprises a first part (60) of an axial clutch,
• an actuator (45) mounted on the header (1) and configured to actuate a pivoting motion of the pendulum arm (36) about the first pivot axis (37),
• a second clutch part (62) configured to engage with the first clutch part (60), the second clutch part (62) being mounted at an outer end of the jackshaft (22).

2. The combine harvester according to claim 1, wherein the pivot connection between the pendulum arm (36) and the header (1) is a flexible pivot connection, configured to allow a limited lateral movement of the pendulum arm (36) with respect to a plane perpendicular to the first pivot axis (37).

3. The combine harvester according to claim 1 or 2, wherein:
• the actuator is a variable length actuator (45) comprising a base portion (45a) and an extendable portion (45b) that can be controlled to extend from or retract toward the base portion, wherein the base portion is pivotably connected to the header and arranged to pivot about a second pivot axis (47),
• the automatic coupling mechanism further comprises a pair of foldable arms (49,50), pivotably interconnected at a midpoint (48),
• the extendable portion (45b) of the actuator is pivotably coupled to the midpoint (48) of the pair of foldable arms (49,50),
• the first foldable arm (49) is pivotably connected to the header at its outer end (55) opposite to the midpoint (48), and arranged to pivot about a third pivot axis (58),
• the second foldable arm (50) is pivotably connected to the pendulum arm (36) at its outer end (56) opposite the midpoint (48),
• the actuator (45) is configured to drive the movement of the midpoint (48) between the foldable arms, so that said movement actuates the approach or retraction of the bearing hub (30) relative to the jackshaft (22).

4. The combine harvester according to claim 3, wherein the first to third pivot axes (37,47,58) are substantially parallel.

5. The combine harvester according to claim 3 or 4, wherein the pivot connections between the actuator (45) and the header (1) and between the first foldable arm (49) and the header (1) are flexible pivot connections.

6. The combine header according to any one of claims 3 to 5, wherein the mechanism is configured so that when the clutch parts (60,62) interlock, the midpoint (48) of the foldable arms (49,50) has moved beyond the position of the outer ends (55,56) of the foldable arms opposite the midpoint (48).

7. The combine harvester according to any one of the preceding claims, wherein the second clutch part (62) is provided with an alignment aid (63), configured to engage in an opening provided in the first clutch part (60).

8. The combine harvester according to any one of the preceding claims, wherein the drive shaft (23) of the combine header is connected to the axle portion (32) located in the bearing hub (30) through a universal joint (24).

9. The combine harvester according to any one of the preceding claims, wherein the jackshaft (22) and the header drive shaft (23) are oriented transversely to the forward driving direction of the combine harvester.

10. The combine harvester according to any one of the preceding claims, wherein the bearing hub (30) is pivotably connected to the pendulum arm (36).

## Patentansprüche

1. Mähdrescher (10) mit:
- einer Fördereinrichtung (8) an der Vorderseite des Mähdreschers, wobei die Fördereinrichtung ein Gehäuse (11), einen Eingangsabschnitt (12) und einen Ausgangsabschnitt (13) aufweist,
- einem Antriebsstrang, der drehbar mit einer Energiequelle des Mähdreschers gekoppelt ist und eine Zwischenwelle (22) in der Nähe des Eingangsabschnitts der Fördereinrichtung aufweist,
- einem Erntevorsatz (1), der an der Vorderseite der Fördereinrichtung (8) lösbar angebracht ist und einen Antriebsstrang aufweist, der eine Vorsatzantriebswelle (23) umfasst, die dazu eingerichtet ist, mit der Zwischenwelle (22) lösbar gekoppelt zu werden,
**dadurch gekennzeichnet, dass**
der Mähdrescher einen Mechanismus zum automatischen Kuppeln der Vorsatzantriebswelle (23) mit der Zwischenwelle (22) aufweist, wobei der Mechanismus umfasst:
- einen Pendelarm (36), der an einem ersten Ende schwenkbar mit dem Erntevorsatz (1) verbunden und so angeordnet ist, dass dieser relativ zum Erntevorsatz (1) um eine erste Schwenkachse (37) gedreht werden kann, die quer zur Zwischenwelle (22) ausgerichtet ist,
- eine Lagernabe (30), die mit dem zweiten, gegenüberliegenden Ende des Pendelarms (36) verbunden ist,
wobei die Nabe (30) ein Gehäuse (31) und einen relativ zum Gehäuse (31) drehbaren Achsenabschnitt (32) im Gehäuse (31) aufweist, wobei ein Ende des Achsenabschnitts (32) drehbar mit der Vorsatzantriebswelle (23) verbunden ist, und ein gegenüberliegendes Ende des Achsenabschnitts (32) einen ersten Teil (60) einer Axialkupplung aufweist,
- eine Betätigungseinrichtung (45), die am Erntevorsatz (1) angebracht und dazu eingerichtet ist, eine Schwenkbewegung des Pendelarms (36) um die erste Schwenkachse (37) zu bewirken,
- ein zweites Kupplungsteil (62), das dazu eingerichtet ist, um in das erste Kupplungsteil (60) einzugreifen, wobei das zweite Kupplungsteil (62) an einem äußeren Ende der Zwischenwelle (22) angebracht ist.

2. Mähdrescher nach Anspruch 1, wobei die Drehverbindung zwischen dem Pendelarm (36) und dem Erntevorsatz (1) eine flexible Drehverbindung darstellt, die dazu eingerichtet ist, eine beschränkte seitliche Bewegung des Pendelarms (36) hinsichtlich einer Ebene, die senkrecht zur ersten Schwenkachse (37) ist, zu ermöglichen.

3. Mähdrescher nach Anspruch 1 oder 2, wobei:
- die Betätigungseinrichtung eine Betätigungseinrichtung (45) mit variabler Länge ist, die einen Basisabschnitt (45a) und einen verlängerbaren Abschnitt (45b) aufweist, der so gesteuert werden kann, dass sich dieser vom Basisabschnitt verlängert oder sich zum Basisabschnitt hin zurückzieht, wobei der Basisabschnitt drehbar mit dem Erntevorsatz verbunden und so angeordnet ist, dass dieser um eine zweite Schwenkachse (47) schwenkt,
- der automatische Kupplungsmechanismus darüber hinaus ein Paar von faltbaren Armen (49, 50) aufweist, die an einem Mittelpunkt (48) schwenkbar miteinander verbunden sind,
- der verlängerbare Abschnitt (45b) der Betätigungseinrichtung schwenkbar mit dem Mittelpunkt (48) des Paars der faltbaren Arme verbunden ist,
- der erste faltbare Arm (49) gegenüber dem Mittelpunkt (48) an seinem äußeren Ende (55) schwenkbar mit dem Erntevorsatz verbunden und so angeordnet ist, dass er sich um eine dritte Schwenkachse (58) schwenkt,
- der zweite faltbare Arm (50) an seinem äußeren Ende (56) gegenüber vom Mittelpunkt (48) schwenkbar mit dem Pendelarm (36) verbunden ist,
- die Betätigungseinrichtung (45) dazu eingerichtet ist, die Bewegung des Mittelpunktes (48) zwischen den faltbaren Armen anzutreiben, sodass die Bewegung das Annähern oder Entfernen der Lagernabe (30) relativ zur Zwischenwelle (22) bewirkt.

4. Mähdrescher nach Anspruch 3, wobei die ersten bis dritten Schwenkachsen (37, 47, 58) im Wesentlichen parallel verlaufen.

5. Mähdrescher nach Anspruch 3 oder 4, wobei die Schwenkverbindungen zwischen der Betätigungseinrichtung (45) und dem Erntevorsatz (1) und zwischen dem ersten faltbaren Arm (49) und dem Erntevorsatz (1) flexible Schwenkverbindungen sind.

6. Mähdrescher nach einem der Ansprüche 3 bis 5, wobei der Mechanismus dazu eingerichtet ist, sodass, wenn die Kupplungsteile (60, 62) ineinander greifen, sich der Mittelpunkt (48) der faltbaren Arme (49, 50) über die Position der äußeren Enden (55, 56) der faltbaren Arme gegenüber dem Mittelpunkt (48) hinausbewegt hat.

7. Mähdrescher nach einem der vorangehenden Ansprüche, wobei der zweite Kupplungsteil (62) mit einer Ausrichtungshilfe (63) versehen ist, dazu eingerichtet, um in eine in dem ersten Kupplungsteil (60) vorgesehene Öffnung einzugreifen.

8. Mähdrescher nach einem der vorangehenden Ansprüche, wobei die Antriebswelle (23) des Erntevorsatzes über ein Kardangelenk (24) mit dem Achsenabschnitt (32), der in der Lagernabe (30) angeordnet ist, verbunden ist.

9. Mähdrescher nach einem der vorangehenden Ansprüche, wobei die Zwischenwelle (22) und die Vorsatzantriebswelle (23) quer zur Vorwärtsfahrtrichtung des Mähdreschers ausgerichtet sind.

10. Mähdrescher nach einem der vorangehenden Ansprüche, wobei die Lagernabe (30) schwenkbar mit dem Pendelarm (36) verbunden ist.

## Revendications

1. Moissonneuse-batteuse (10), comprenant :
• un dispositif d'alimentation (8) à l'avant de la moissonneuse-batteuse, le dispositif d'alimentation comprenant un logement (11), une section d'entrée (12) et une section de sortie (13),
• une chaîne cinématique reliée de manière rotative à une source d'alimentation de la moissonneuse et comprenant un arbre intermédiaire (22) à proximité de la section d'entrée du dispositif d'alimentation,
• une tête de moissonneuse (1) attachée de manière amovible à une partie avant du dispositif d'alimentation (8), et comprenant une chaîne cinématique de tête qui comprend un arbre d'entraînement de tête (23) configuré pour être relié de manière amovible à l'arbre intermédiaire (22),
**caractérisée en ce que**
la moissonneuse-batteuse (10) comprend un mécanisme destiné à relier automatiquement l'arbre d'entraînement de tête (23) à l'arbre intermédiaire (22), ledit mécanisme comprenant :
• un bras pendulaire (36) relié de manière rotative à la tête (1) à une première extrémité, et agencé pour tourner par rapport à la tête (1), autour d'un premier axe de pivotement (37) orienté transversalement par rapport à l'arbre intermédiaire (22),
• un moyeu de support (30) relié au bras pendulaire (36) à une deuxième extrémité opposée du bras pendulaire (36),
le moyeu (30) comprenant un boîtier (31) et une partie d'essieu rotatif (32) à l'intérieur du boîtier (31) et pouvant tourner par rapport au boîtier (31), dans lequel une extrémité de la partie d'essieu (32) est reliée de manière rotative à l'arbre d'entraînement de tête (23), et une extrémité opposée de la partie d'essieu (32) comprend une première partie (60) d'un embrayage axial,
• un actionneur (45) monté sur la tête (1) et configuré pour actionner un mouvement de pivotement du bras pendulaire (36) autour du premier axe de pivotement (37),
• une deuxième partie d'embrayage (62) configurée pour être mise en prise avec la première partie d'embrayage (60), la deuxième partie d'embrayage (62) étant montée sur une extrémité de l'arbre intermédiaire (22).

2. Moissonneuse-batteuse selon la revendication 1, dans laquelle le raccord pivotant entre le bras pendulaire (36) et la tête (1) est un raccord pivotant flexible, configuré pour permettre un mouvement latéral limité du bras pendulaire (36) par rapport à un plan perpendiculaire au premier axe de pivotement (37).

3. Moissonneuse-batteuse agricole selon la revendication 1 ou 2, dans laquelle :
• l'actionneur est un actionneur de longueur variable (45) comprenant une partie de base (45a) et une partie extensible (45b) qui peut être commandée afin de s'étendre à partir de ou de se replier vers la partie de base, dans lequel la partie de base est reliée de manière rotative à la tête et agencée pour tourner autour d'un deuxième axe de pivotement (47),
• le mécanisme de couplage automatique comprend en outre une paire de bras repliables (49, 50), interconnectés de manière rotative à un point central (48),
• la partie extensible (45b) de l'actionneur est reliée de manière rotative au point central (48) de la paire de bras repliables (49, 50),
• le premier bras repliable (49) est relié de manière rotative à la tête à son extrémité (55) opposée au point central (48), et agencé pour tourner autour d'un troisième axe de pivotement (58),
• le deuxième bras repliable (50) est relié de manière rotative au bras pendulaire (36) au niveau de son extrémité (56) opposée au point central (48),
• l'actionneur (45) est configuré pour entraîner le mouvement du point central (48) entre les bras repliables, de sorte que ledit mouvement déclenche l'extension ou la rétraction du moyeu de support (30) par rapport à l'arbre intermédiaire (22).

4. Moissonneuse-batteuse selon la revendication 3, dans laquelle les premier, deuxième et troisième axes de pivotement (37, 47, 58) sont substantiellement parallèles.

5. Moissonneuse-batteuse selon la revendication 3 ou 4, dans laquelle les raccords pivotants entre l'actionneur (45) et la tête (1) et entre le premier bras repliable (49) et la tête (1) sont des raccords pivotants flexibles.

6. Moissonneuse-batteuse selon l'une quelconque des revendications 3 à 5, dans laquelle le mécanisme est configuré de telle manière que, lorsque les parties d'embrayage (60, 62) se verrouillent, le point central (48) des bras repliables (49, 50) ait dépassé la position des extrémités (55, 56) des bras repliables opposées au point central (48).

7. Moissonneuse-batteuse selon l'une quelconque des revendications précédentes, dans laquelle la deuxième partie d'embrayage (62) est équipée d'un système d'aide à l'alignement (63), configuré pour être engagé dans une ouverture prévue dans la première partie d'embrayage (60).

8. Moissonneuse-batteuse selon l'une quelconque des revendications précédentes, dans laquelle l'arbre d'entraînement (23) de la moissonneuse-batteuse est relié à la partie d'essieu (32) situé à l'intérieur du moyeu de support (30) par un joint universel (34).

9. Moissonneuse-batteuse selon l'une quelconque des revendications précédentes, dans laquelle l'arbre intermédiaire (22) et l'arbre d'entraînement de tête (23) sont orientés transversalement dans le sens d'avancement de la moissonneuse-batteuse.

10. Moissonneuse-batteuse selon l'une quelconque des revendications précédentes, dans laquelle le moyeu de support (30) est relié de manière rotative au bras pendulaire (36).
